# EUROPEAN PATENT APPLICATION

(11) **EP 4 345 794 A1**
(43) Date of publication of application: **03.04.2024**
(21) Application number: 23199994.7
(22) Date of filing: 27.09.2023
(51) Int. Cl.: G09B 15/00, G09B 15/08

(54) **PERSONALIZED CURRICULUM**

(30) Priority: 30.09.2022 FI 20225866
(71) Applicant: Yousician Oy, 00530 Helsinki (FI)
(72) Inventor: THÜR, Christoph, 00530 Helsinki (FI); JUNTUNEN, Alicja, 00530 Helsinki (FI); KLAPURI, Anssi, 00530 Helsinki (FI); SIMOLA, Juhani, 00530 Helsinki (FI); RODRÍGUEZ, Marcelo, 00530 Helsinki (FI); HIRVONEN, Toni, 00530 Helsinki (FI); NIKUNEN, Pyry, 00530 Helsinki (FI); HIIPAKKA, Jarmo, 00530 Helsinki (FI)
(74) Representative: Espatent Oy

(57) **Abstract**

A method in an apparatus, the method comprising receiving a set of learning targets based on a user selection; determining a user skill level by analyzing an input of a user performance of at least one musical piece; determining a difficulty level for each learning target of the set of learning targets; determining an effort parameter for each learning target of the set of learning targets based on the user skill level and/or the difficulty level of each learning target; arranging the set of learning targets based on the effort parameters; and providing a personalized curriculum based on the arranged set of learning targets.

## Description

### RELATED APPLICATIONS

This application relates to U.S. Patent No. 9,767,705 B1, titled SYSTEM FOR ESTIMATING USER'S SKILL IN PLAYING A MUSIC INSTRUMENT AND DETERMINING VIRTUAL EXERCISES THEREOF, granted on 2017/09/19, which is hereby incorporated by reference in its entirety.

### TECHNICAL FIELD

The present disclosure generally relates to learning music. In particular, but not exclusively, the present disclosure relates to providing a personalized curriculum for a user learning music.

### BACKGROUND

This section illustrates useful background information without admission of any technique described herein representative of the state of the art.

Currently, the curriculum (or syllabus) the users follow when using a music learning service is typically very static and predetermined. In some cases, the user may be able to swap a song or an exercise based on, e.g. their preferred musical style, but commonly such options would still be expected to be of a similar difficulty level, and require and teach the same skills.

Previously known music learning services provide for testing the skill level of a user and recommending exercises suitable for that level. Such a system is known e.g. from U.S. Patent No. 9,767,705 B1.

Learning to play a musical instrument is however not always merely an issue of improving technical skills with an exercise selected in a straightforward manner based on the current skill level. That is, learning music is not just a question of reaching the next technical level, but the goals and desires of the user for learning may vary greatly. Accordingly, there is a need for a system in which the users set their own goals and which allows flexibility in learning based on the preferences of the user for setting up a good, motivating curriculum.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

In a first example example aspect, there is provided a method in an apparatus, the method comprising
receiving a set of learning targets based on a user selection;
determining a user skill level by analyzing an input of a user performance of at least one musical piece;
determining a difficulty level for each learning target of the set of learning targets;
determining an effort parameter for each learning target of the set of learning targets based on the user skill level and/or the difficulty level of each learning target;
arranging the set of learning targets based on the effort parameters; and
providing a personalized curriculum based on the arranged set of learning targets.

The method may further comprise receiving input of a user performance of at least one learning target of the personalized curriculum.

The method may further comprise determining a reward parameter for the set of learning targets; wherein arranging the set of learning targets comprises arranging the set of learning targets based on the effort parameters and the reward parameter.

Arranging the set of learning targets may comprise arranging the learning targets in order to minimize the sum of the effort parameters of the learning targets of the set of learning targets.

Arranging the set of learning targets may comprise arranging the learning targets in order to maximize the reward parameter.

The method may further comprise determining whether the user has completed the at least one learning target by analyzing the input of the user performance of the at least one learning target of the personalized curriculum.

The method may further comprise updating the determined user skill level by analyzing the input of the user performance of the at least one learning target of the personalized curriculum and/or by analyzing a user performance of a further musical piece.

The method may further comprise
updating the effort parameter of each learning target based on the updated user skill level and the difficulty level of each learning target;
updating the reward parameter of the set of learning targets; and
re-arranging the set of learning targets based on the updated effort parameter and/or the updated reward parameter; and
providing an updated personalized training curriculum based on the re-arranged set of learning targets.

The method may further comprise adding learning targets to the set of learning targets based on the effort parameter of the learning targets of the set of learning targets and/or the reward parameter of the set of learning targets.

Determining the effort parameter may comprises estimating the time required for the user to complete the learning target.

Determining the reward parameter may comprise estimating the time required between completing consecutive learning targets of the set of learning targets.

A learning target of the set of learning targets may be selected from a group of a song, a song version, a riff, a scale, a course and a melody.

The method may further comprise presenting the personalized training curriculum to the user; and receiving user input relating to the learning targets on the personalized training curriculum.

Determining the effort parameter and/or the reward parameter may be based on stored data on user performance on learning targets similar to the learning targets of the set of learning targets.

The method may further comprise presenting recommendations on further learning targets for the user.

The recommendations on further learning targets for the user may comprise recommendations selected based on the user profile.

The recommendations on further learning targets for the user may comprise a connection with a human teacher.

The arranged set of learning targets maybe arranged as a linear list of learning targets or as a list of learning targets having multiple branches.

According to a second example aspect, there is provided an apparatus comprising at least one memory and processor collectively configured to cause the apparatus to perform the method of the first example aspect.

According to a third example aspect there is provided a non-transitory memory medium comprising a computer program, the computer program comprising computer program code configured to, when executed by an apparatus, to cause the apparatus to perform the method of the first example aspect.

Any memory medium may comprise a digital data storage such as a data disc or diskette; optical storage; magnetic storage; holographic storage; opto-magnetic storage; phase-change memory; resistive random-access memory; magnetic random-access memory; solid-electrolyte memory; ferroelectric random-access memory; organic memory; or polymer memory. The memory medium may be formed into a device without other substantial functions than storing memory or it may be formed as part of a device with other functions, including but not limited to a memory of a computer; a chip set; and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1A schematically shows a system according to an example embodiment;
Fig. 1B shows a flow chart of a method of determining a difficulty level and user skill level according to an example embodiment;
Fig. 2 shows a flow chart of a method according to an example embodiment;
Fig. 3 shows a flow chart of a method according to an example embodiment;
Fig. 4 shows a flow chart of a method according to an example embodiment;
Fig. 5 shows a flow chart of a method according to an example embodiment; and
Fig. 6 shows a schematic block diagram of a generalized form of an apparatus according to an example embodiment.

### DETAILED DESCRIPTION

In the following description, like reference signs denote like elements or steps.

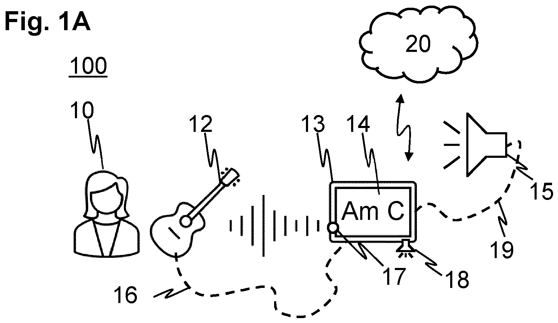

Fig. 1A schematically shows a user 10 and a system 100 according to an example embodiment. The system comprises a musical instrument 12, here a guitar and an apparatus 13 such as a tablet computer or a smartphone with a display 14. It shall also be appreciated that the apparatus 13 need not perform all processing locally. The apparatus 13 may in an embodiment operate as a terminal only acting as a man-machine interface, while processing is performed partially or entirely in a remote location, for example a remote server or a cloud-based service 20.

Fig. 1A further shows an optional electric cable 16 such as an analogue guitar cable, microphone cable, or a MIDI cable; a built-in or attachable microphone 17; a built-in or attachable loudspeaker 18; and an external loudspeaker 15 with an optional loudspeaker cable 19. In an example embodiment, system 100 comprises a plurality of microphones, e.g., one or more for each musical instrument. In an example embodiment, the system 100 comprises a plurality of loudspeakers 15, 18. The loudspeakers may be wired and / or wireless. While the system of Fig. 1A has been depicted with a musical instrument 12 comprising a guitar, the embodiments of the invention described herein are equally applicable to other musical instruments or singing.

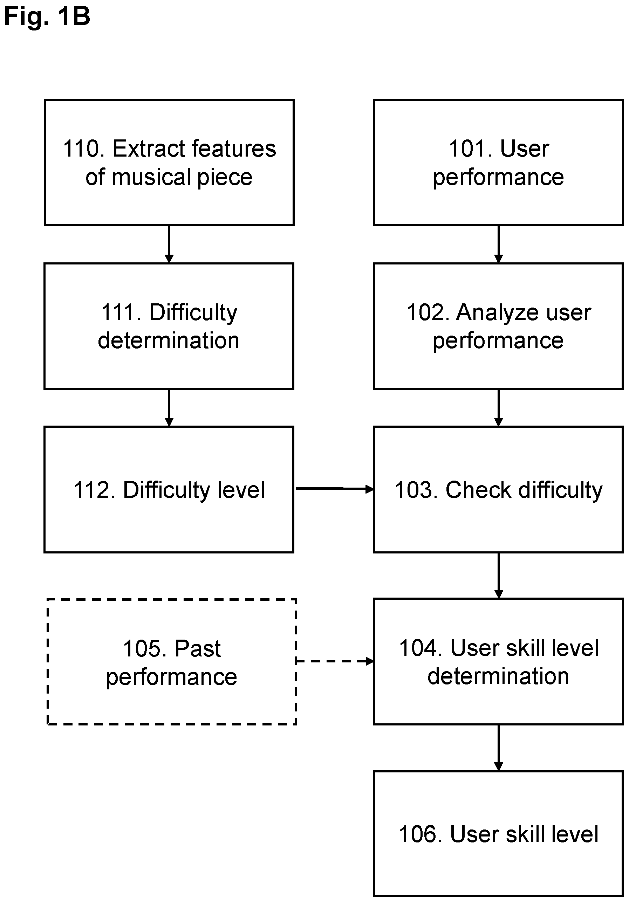

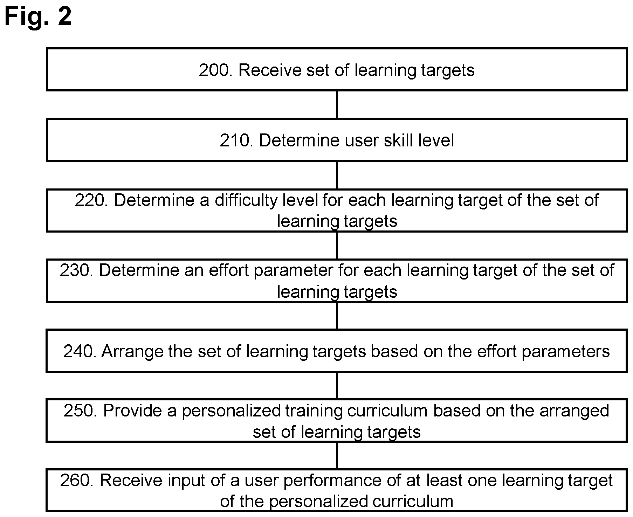

FIG. 1B shows a flow chart of a method of determining a difficulty level and user skill level according to an example embodiment. The method shown in Fig. 1B is simplified illustration of the method used in an example embodiment for analyzing the user's performance and skill characteristics known from the Yousician^{®} U.S. Patent No. 9,767,705 B1, in particular Figs 2 to 3b with the corresponding description thereof.

At 101 the user performs a musical piece. In an embodiment, the musical piece comprises a song, a variation of a song, an exercise or a skill test. In an embodiment, the user is prompted to perform the musical piece. In an example embodiment, the musical piece the user is to perform is selected and presented to the user. In a further embodiment, a selection of musical pieces is presented to the user for user selection of the musical piece to be performed.

At 102 the user performance is analyzed and compared against the target musical notation to detect any mistakes or inaccuracies in pitch content, timing, dynamics, and other factors in performing the sounds that make up the song. Also the locations of the mistakes/inaccuracies are detected: which events (notes, chords) were performed correctly or incorrectly, and what types of mistakes were made if any.

In an embodiment, the user performance may be stored as historic user performance comprising at least part of the following: The difficulty level and difficulty characteristics (constituting a difficulty profile) of a musical piece, any mistakes that the user made when performing the song, the number of times the user performed the song before this performance, and the calendar time when the performance(s) took place. The abovementioned information is in an embodiment stored in the user's performance history. Based on the performance history, in an embodiment, the user's skill level may be computed.

In an example embodiment, other users are also allowed to give feedback and grade the stored performances of other users. This allows for evaluating user performances from a human viewpoint, in comparison to an objective comparison of difficulty and skill characteristic values or performance analysis of a song. This may be also used to evaluate the quality of improvised performances where the idea is not to play the exact notes and chords of the song but to take liberties within reasonable limits. An algorithm then calculates a "crowdsourced performance evaluation" based on several user-provided evaluations. In addition to a grade that a user has given other information, such as the skill characteristics of the user providing the grade, the total amount of grades or feedback evaluations provided by the user, the content or value of grades and date and time of when the grades have been given. Said additional information or metadata is in an embodiment used by the algorithm that combines the grades given by several users, in order to give more weight to reliable evaluations. Hence, some users' feedback may be given more value than others whereas some feedback may be filtered as less- or non-relevant, such as spam or otherwise non-reliable feedback. This historic user performance data is in an embodiment further used in determining current skill level and skill characteristics.

Along with analyzing user performance, the difficulty level and/or characteristics of the musical piece performed by the user, for example of a song, is determined. In an embodiment, the difficulty level of the musical piece is previously known and accordingly does not need to be determined anew.

The difficulty of a musical piece is represented in the system by a difficulty level. In an embodiment, the difficulty level is a single scalar value (one number) that tells how difficult the song is to perform. In an embodiment, larger numbers indicate higher difficulty. Some songs/exercises are more difficult to perform (play) than others. There can be various reasons for that: the number of notes per second may be relatively high and/or the temporal placement of the notes can be rhythmically difficulty and/or the notes to be played can be musically unpredictable and/or the notes are motorically (physically) difficulty to produce on the target instrument.

In an embodiment, the difficulty level comprises more than one difficulty characteristic values (for example "5, 7, 3") that represents the difficulty of a musical piece from the viewpoint of the different aspects (characteristics) of difficulty. For example, the first characteristic value may represent "the difficulty of the song solely from the rhythmic viewpoint, ignoring all the other characteristics of difficulty". Similarly, the second characteristic value may represent the difficulty solely from the viewpoint of motoric difficulty, and so forth. There are several different difficulty characteristics and some of them are instrument specific.

Difficulty characteristic values include in an embodiment for example:
rhythmic difficulty: how irregularly musical notes and chords are located in time, and what is the "speed" of music (the rate at which notes/chords should be played),
motoric difficulty: how difficult it is physically to produce the musical sounds using a musical instrument. Usually mainly related to the complexity of the physical arrangement of user's fingers,
harmonic difficulty: how complex combinations of musical notes need to be played simultaneously (as chords) or sequentially (as very unpredictable melodies),
expressivity difficulty: does the user need to control and vary the loudness ("dynamics") and timbre ("tone color") of the musical sounds being produced. How much and how often does the user need to vary those?

The difficulty level of a musical piece, for example song, is determined by a mathematical estimation model referred herein also as "difficulty determination algorithm", which algorithm is capable of determining the difficulty level comprising the more than one difficulty characteristics of a musical piece automatically.

At 110, the specific features that describe the individual events (notes and chords in their musical context) that make up the musical piece are extracted. For example, the features describing a chord may e.g. include its temporal distance from nearest other event, the number of simultaneous notes in the chord, and other musical and instrument-specific attributes that contribute to the difficulty of playing the note or chord.

In addition, in an embodiment, features describing the song as a whole, for example the length of the song in seconds, the average number of notes per second, and other more musical features and more complex statistics are extracted.

At 111, the difficulty level, comprising for example more than one difficulty characteristic is determined.

The overall difficulty of the song is calculated by using a difficulty determination algorithm using the features extracted at 110. For example, in an example embodiment, a simple mathematical formula that only takes into account the "speed" of music (the rate at which notes should be played) would be as follows. Difficulty D=(1/N) Σn (1/T(n)), where N is the total number of notes in the song, T(n) is the temporal distance between note n and the note preceding it. Difficulty in that case is defined as the average of 1/T(n) calculated over the notes comprising the song, where 1/T(n) is the inverse of T(n): short distances T(n) between notes leading to large 1/T(n). More complex difficulty formulas involving more features can be used to achieve more accurate difficulty estimates. Such formulas can be found by using machine learning algorithms that try to minimize the error between manually annotated difficulties and the estimated difficulties given by the mathematical formula being sought. The algorithms require training data: songs for which the difficulties have been annotated manually. Further, in an embodiment, similar approach is applied to the different difficulty characteristics.

In an embodiment, for accuracy any of the difficulty characteristic values as well as the skill level values discussed hereinafter may be given in the form of reported error margin e.g. "the difficulty characteristic value of a song S is 9.2±1.1" or "based on the information thus far, the skill characteristic value of user U is ≧5.3".

In an embodiment, in addition to or instead of the estimation by the algorithm, user feedback may also be used in assessing song difficulty. For example, used feedback may be facilitated by allowing users to assess a song's difficulty e.g. by stating whether they think the song is more or less difficult than estimated. In a further embodiment, the system uses historic user performance information to improve the difficulty level estimation.

At 103, the difficulty level 112 of the musical piece performed by the user is checked. Subsequently, at 104, the user skill level is determined. In an embodiment the user skill level comprises a single scalar value.

The skill characteristic values of a user are in an embodiment defined by the corresponding difficulty characteristic values of a musical piece that the user is able to perform. For example, if one of user's skill characteristic values is 10, she can play songs with corresponding difficulty characteristic value of up to 10 by merely familiarizing herself with the song in question and minimal practice, whereas songs with the corresponding difficulty characteristic value of >10 would require considerably more practice.

In an embodiment, the user skill level comprises more than one skill characteristic value (for example "4, 3, 7") that represent the skill of the user from the viewpoint of different areas of musical skill (for example: melodic skill 4, rhythmic skill 3, motoric skill 7). The skill level of a user may be at least partially defined by the difficulty profile of the songs she can perform. For example, the user may be motorically skilled, but lack rhythmic skills, and therefore the respective characteristic values of the skill level would be different. As a consequence, the user would be able to play songs that require high motoric skill, but is likely to make mistakes in rhythmically difficult sections.

In an example embodiment, the skill level of the user is determined using data of the user performance at 101 analyzed at 102 as follows: if the user was able to perform the musical piece at 101 with a particular difficulty characteristic value of N (e.g. making only few mistakes even when performing them for the first time) defined at 112, the corresponding skill characteristic value of the user is determined to be ≧N. Similarly, if the user fails (makes many mistakes) when performing the musical piece with a particular difficulty characteristic value of N, that corresponding skill characteristic of the user is determined to be <N.

In a further example embodiment, the skill level of the user is determined using in addition or instead stored data of past user performance 105 as follows: if the user is able to consistently perform songs with a particular difficulty characteristic value of N, e.g. making only few mistakes even when performing them for the first time, the corresponding skill characteristic value of the user is determined to be ≧N. Similarly, if the user then consistently fails (makes many mistakes) when performing songs with another difficulty characteristic value of M, that corresponding skill characteristic value of the user is determined to be <M.

Accordingly, the song difficulty level may be used to determine user's skill characteristic values. For example, if the user is able to consistently perform well, with only few mistakes, songs where e.g. the "rhythmic difficulty characteristic" value of the song is 7, the "rhythmic skill characteristic" of the user's skill level can be estimated to be ≧7.

In an embodiment, to be able to determine the user's skills at 104, the system continuously estimates user skill level for various kinds of musical material performed at 101. For skill estimation, the system in an embodiment uses the user's playing, or singing, as input by, e.g., capturing an acoustic signal or receiving MIDI events. These inputs are then analyzed for notes played correctly or incorrectly, for timing, and for other features that can be used in determining the user's skill level comprising more than one skill characteristic value. In an example embodiment, the ability to play a certain chord can form an independent skill characteristic value. In a further example embodiment, the skill characteristic values are either more complex and abstract, e.g. playing melodies, or dependent on other skills. For example learning a chord is assumed to have interactions with learning other chords.

In an embodiment, in simple cases, the skill estimation model is based on straightforward playing statistics, from single or multiple users, of correctly played instances of independent skill characteristic values like chords. In a further embodiment, in more sophisticated applications, more complicated predictive modeling is applied via state-based methods such as Bayesian inference or Kalman filtering, or time-series prediction via a data-trained probabilistic model. The common idea of the methods used in various embodiments is to produce an up-to-date estimate for success of a single musical event, or a bigger unit, of a given skill dimension.

At 106, the user skill level has been determined. The user skill level determined at 106 is then used as an input parameter for further steps of the method according to the invention Determining the skill level of a user and constantly updating the skill level is straightforward in situation in which the user uses the system regularly and new performance data is accordingly regularly available. The situation is more complicated in cases of new users and returning users.

Returning users, i.e. users who have not used the system for a while, are not atypical in learning music. Learning music is often periodic, sporadic and casual, even spur-of-the-moment, compared to learning other types of skills. Furthermore, in case of returning users, it is not known whether the user has kept on practicing during the absence from using the system or whether they have paused practicing. Hence, the previous determined user skill might be too low, if the user has been practicing, or too high as the skills of some users tend to deteriorate during a pause. The method according to the invention needs to be able to adapt to the needs of returning and new users as well. In an embodiment, the user skill determination is accelerated in case of new and returning users, so that the determined skill level is updated more quickly, that is the algorithm used for the determination is configured to make larger changes to the user skill level, or certain skill characteristic values of the user skill level in order to reach an accurate estimate of the present skill level more quickly.

Fig. 2 shows a flow chart of a method according to an example embodiment. At 200 a set of learning targets, or learning goals, is received. In an embodiment, the user selects the learning goals using a user interface. The learning targets in an embodiment comprise songs or versions of songs, i.e. the user states the learning goals by selecting songs that the user wishes to be able to perform. In a further example embodiment, the learning targets comprise further musical pieces or entities selected from the group of solos, riffs, scales, courses and musical exercises. In an example embodiment, the user is presented with options for selection of learning targets, for example based on user profile including stored information on user preferences, past performance history and/or learning history.

In an embodiment, the set of learning targets comprises at least one learning target. In a further embodiment, the number of learning targets is limited, i.e. the user is allowed to select a limited number of learning targets. In a still further embodiment, the user profile may affect the selection of learning targets, for example a user account type or subscription type may affect the selection.

At 210, the user skill level is determined. In an embodiment, the user skill level is determined as described hereinbefore with reference to Fig. 1B. In an embodiment, it is checked whether a recent determination of skill level is available in which case the determination need not be carried out anew. In a further embodiment, if the user has been absent for a prolonged time, or is a new user, the skill level determination is adapted to take that into account.

At 220, the difficulty level for each learning target of the set of learning targets is determined. In an embodiment, the difficulty level of each learning target, which comprise musical pieces, is determined as described hereinbefore with reference to Fig. 1B. In an embodiment, the difficulty level of the learning targets is in addition compared to the difficulty level of other learning targets, or to the difficulty level of musical pieces the user has previously performed. In an embodiment, the similarity of each learning target of the set of learning targets, in terms of required skills, to other learning targets of the set is calculated. Such similarity comprises for example the proportion of same chords.

Determination of the difficulty level of each learning target happens along the same dimensions of musical skill as the user skill determination, so that user's skill can be mapped to the requirements of a given song. The determined user skill level in an embodiment comprises several skill characteristic values describing the skills of a user on different dimensions of musical skill. Accordingly, the difficulty level is in an embodiment not a single value, but rather comprises several difficulty characteristic values corresponding to the skill characteristic values that together describe the difficulty of the song.

At 230, an effort parameter is determined for each learning target of the set of learning targets. The determination of the effort parameter is based on the user skill level and the difficulty level of each learning target.

The effort parameter is an estimate of the effort required for the user to learn any song, or other musical piece, the user has selected as a learning target based on both the user's current skill level and the requirements of the learning target. To learn a song means the ability to play the song at a predetermined level of fluency. In an embodiment, determining the effort parameter comprises taking the user's current skill level, or some of the user's current skill characteristic values relevant to the learning target, and extrapolating how long or how many attempts it will take to reach the levels that commonly result in completing the learning target. The extrapolation model in an embodiment comprises a knowledge-based model, or a data-based model, or a combination of both. In a further embodiment, the effort estimation can be based on a separate knowledge based, or data based probabilistic model, not using the skill level of the user.

In an embodiment, the determined effort parameter comprises an estimate of time required by the user to complete the learning target, for example an estimate of required training hours or required calendar time. Such an estimate is in an embodiment at least in part based on the learning history of the user, if available, or on the learning history of other users. In an embodiment, determining the effort parameter is at least in part based on stored data on user performance on learning targets similar to the learning target for which the effort parameter is being determined. In a further embodiment, the effort parameter comprises instead or in addition to the estimate of learning time, a personalized difficulty parameter estimating the difficulty of the learning target for the user.

At 240, the set of learning targets is arranged based on the effort parameters of each learning target. In an embodiment, the set of learning targets is arranged in the increasing order of effort required, i.e. the learning target with the smallest effort parameter is arranged as the first learning target.

In a further embodiment, the set of learning targets is arranged in order to minimize the cumulative effort of the user. When there are multiple learning targets in the set of learning targets, the skills required can have significant overlap, and therefore the total effort of the multiple learning targets is smaller than the sum of the efforts for each learning target separately. In an embodiment, the total effort of the set of learning targets is estimated in all the different orders of the learning targets, since due to interactions between skills and learning targets, the total effort may differ between the orders and the set of learning targets is then arranged in the order requiring the least effort.

In a further embodiment, the arrangement of the set of learning targets is not merely linear, i.e. a list of consecutive learning targets, but has for example more than one route that the user needs to select from. The set of learning targets may first comprise a first learning target that has been arranged as the first learning target for example based on requiring the least effort and after that comprise for example two learning targets each of which requires the user to improve a certain skill characteristic value which is not the same for both learning targets. Accordingly, after the user has completed the first learning target, the set of learning targets has two possible routes to follow from which the user chooses, either actively choosing from a presented selection or by starting to perform one or the other. Accordingly, the arranged set of learning targets branches into two routes. In some cases, the user may need to return to complete both branches before the branches are joined again for example at a further learning target, which requires skills the user has practiced on both branches. Accordingly, the arrangement, which may be based on minimizing the effort, can also comprise a branching and rejoining list of learning targets.

In a further embodiment, the user profile is taken into account in arranging the set of learning targets. A user may prefer, based on the learning history, to learn more difficult learning targets first, or alternate between learning targets requiring little effort and learning targets requiring more effort. Accordingly, the set of learning targets may be arranged also in an order not minimizing the effort or in an order other than an increasing order of effort parameters.

At 250, the user is provided with a personalized curriculum based on the arranged set of learning targets, i.e. the arranged set of learning targets is presented to the user. In an embodiment, the personalized curriculum based on the arranged set of learning targets is presented to the user graphically or in text form. In an embodiment, the personalized curriculum has several branches which are presented to the user and the user selects the preferred route. In an embodiment, any selection made is stored in the user profile, and is used to determine future choices for e.g. recommendations and arrangements.

At 260, input of a user performance of at least one learning target of the personalized curriculum is received in case the user decides to perform at least one learning target. Furthermore, each time input is received from a user performance, be it a performance of the at least one learning target or a further musical piece, the determined user skill level is updated.

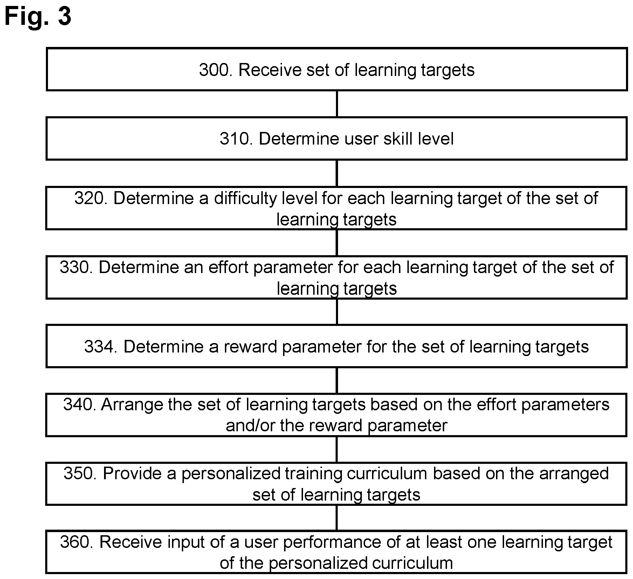

Fig. 3 shows a flow chart of a method according to an example embodiment. Steps 300-330 and 350-360 correspond to the method steps 200-230 and 250-260 described hereinbefore with reference to Fig. 2.

At 334, a reward parameter is determined for the set of learning targets. The reward parameter comprises an estimate of user motivation for learning. In an embodiment, determining the reward parameter comprises estimating the time between consecutive learning targets of the set of learning targets. Completion of a learning target can be considered a reward, or a rewarding moment, and receiving rewards evenly while training tends to increase the motivation of the user and lessen the risk of user giving up with the training. In an embodiment, the reward parameter is determined for the set of learning targets by estimating the distribution of rewards for different orders of the learning targets of the set of learning targets, i.e. estimating the reward if the user learns learning targets S1 and S2 in that order or in the opposite order. In a further embodiment, the user profile is taken into account in determining the reward parameter for the set of learning targets. For example, if the user has previously been deemed best motivated while receiving rewards at a certain manner, an order of the learning targets providing a similar reward profile could be determined as having the highest reward parameter.

At 340, the set of learning targets is arranged based on the effort parameters of each learning target and/or based on the reward parameter of the set of learning targets. The set of learning targets is in an embodiment arranged as described hereinbefore with reference to Fig. 2, and in addition the reward parameter is taken into account. For example, if the cumulative effort of several orders of learning targets is substantially the same, the order with the highest reward parameter would be chosen. In a further embodiment, the set of learning targets is arranged based on the highest reward parameter and the effort is taken into account only as a secondary criterion.

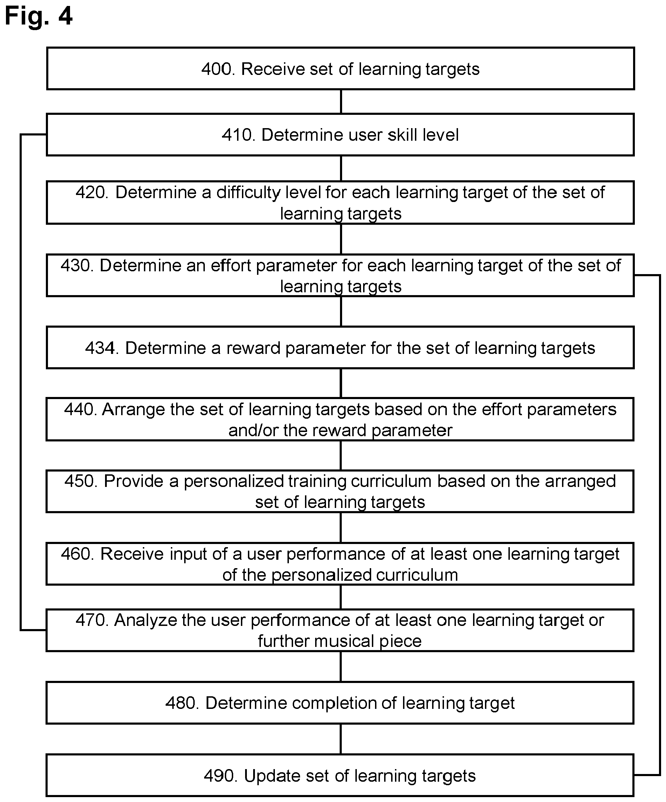

Fig. 4 shows a flow chart of a method according to an example embodiment. Steps 400-460 correspond to the method steps 300-360 described hereinbefore with reference to Figs. 2 and 3. Furthermore, it is noted that the additional steps described with reference to Fig. 4 are applicable in the embodiment of Fig. 2, i.e. in an embodiment in which the reward parameter is not determined.

At step 470, the user performance of at least one learning target of the personalized curriculum is analyzed. In an embodiment, the analysis is carried out in a manner similar to that described hereinbefore with reference to Fig. 1B in defining the skill level of the user. In an embodiment, if the user chooses to perform a further musical piece instead of, or in addition to, the at least one learning target, input of such a performance is received as well, and analyzed in a similar manner. In an embodiment, the analysis carried out at 470 is used to update the skill level of user at 410, i.e. the user skill level is constantly updated based on new performance data received, and the subsequent steps are also repeated and the set of learning goals is rearranged as needed based on the updated skill level.

At step 480, if input of a user performance on at least one learning target has been received, the completion of a learning target is determined based on the analyzed user performance, i.e. it is determined whether the user has performed the learning target at a predetermined level of fluency. Furthermore, determining completion of a learning target comprises, independent of the result of the determination, providing feedback to the user. If the user has performed the same at least one learning target several times and it is determined that the learning target is not completed but very close to completion, then in an embodiment the learning target is deemed to have been completed in order to provide a reward for the user and decrease the risk of user giving up entirely.

Subsequently, at 490, the set of learning targets is updated, and the completed learning target is removed therefrom. In an embodiment, as the set of learning targets is updated, determining an effort parameter for each learning target of the set of learning targets, and steps subsequent thereto, is repeated and the personalized curriculum is updated as needed based on the new determinations.

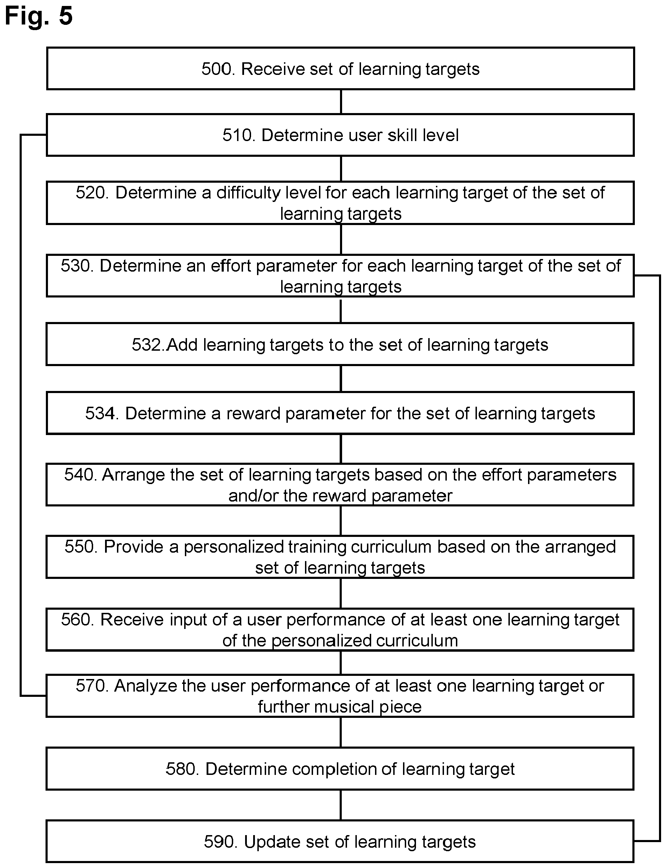

Fig. 5 shows a flow chart of a method according to an example embodiment. Steps 500-530 and 534-590 correspond to the method steps 400-430 and 434-490 described hereinbefore with reference to Figs. 2, 3 and 4. Furthermore, it is noted that the additional steps described with reference to Fig. 5 are applicable in the embodiment of Fig. 2, i.e. in an embodiment in which the reward parameter is not determined.

At 532, learning targets are added to the set of learning targets. Adding a learning target comprises presenting user with recommended learning target, which the user may then select into the set of learning targets or decline.

In an embodiment, the user profile is taken into account in adding learning targets to the set of learning targets. For example, a prior preference might have been expressed by the user and stored, and learning targets the user is more willing to include in their curriculum can be readily added based on such prior preference. A prior preference could comprise preference concerning for example musical style and/or genre and/or learning style and/or learning material. Furthermore, user history, such as previous selection of learning targets, previous performances and/or other previous activity could be taken into account in adding learning targets.

In an embodiment, learning targets are added in a situation in which the user skill is low compared to the difficulty level of the learning targets received at 500. For example, if the user hasn't selected any learning target that could work as a "stepping stone" towards learning a more difficult learning target, a new learning target may be added. In an embodiment, such a new learning target would contain similar musical material as the selected more difficult learning target and/or be easier than the selected more difficult learning target and/or match the musical taste of the user in terms of the genre and the backing track. Hence, completing the new learning target first would ensure that the user gets rewarded soon enough in order to avoid frustration and dropping out. Such an added learning target recommendation could be fully automatic, or be presented as a list of "other, similar, but easier learning targets" for user selection.

In an embodiment, if the user has already completed the most difficult learning target of the set of learning targets, a new more difficult learning target is added to the set of learning targets.

In an embodiment, learning targets are added based on reasons not directly dependent on the user. For example learning targets which incur additional fees or which are a part of an ongoing campaign could be added.

Typically, the learning targets comprise songs or other musical pieces. In an embodiment, added learning targets comprise various kinds of trainers and courses in addition to, or instead of, songs. Such added learning targets are chosen based on the criterion that they most efficiently help the user towards completing an existing learning target, i.e. minimize the effort of the user. In an embodiment, the engagement of the user for trainers of different kinds is tracked and taken into account in adding learning targets. For example, if the user has never tried a certain type of trainer although it is included in the set of learning targets, the system prompts the user or makes the trainer more prominent. Furthermore, if the user has tried a certain kind of trainer and repeated it many times, it indicates high engagement. If, on the other hand, the user has tried a certain kind of trainer a couple of times, but often skips it, thus indicating low engagement, other types of learning targets such as an instructional video instead of gamified trainer, or vice versa, are added instead.

In an embodiment, if the user declines all added, i.e. recommended, learning targets, and does not perform the existing learning targets, it is recognized that acceptable learning targets cannot be found. In such a case, in an embodiment, a human teacher may add a suitable learning target, for example using a teacher interface to the system. In a further embodiment, a recommendation to contact a human teacher is presented to the user. Such a recommendation in an embodiment includes a real-time user performance and/or sending a stored user performance to a human teacher.

Any of the afore described methods, method steps, or combinations thereof, may be controlled or performed using hardware; software; firmware; or any combination thereof. The software and/or hardware may be local; distributed; centralized; virtualized; or any combination thereof. In an embodiment, any of the afore described methods, method steps, or combinations thereof, may be controlled or performed using a remote server and/or a cloud-based service. Moreover, any form of computing, including computational intelligence, may be used for controlling or performing any of the afore described methods, method steps, or combinations thereof. Computational intelligence may refer to, for example, any of artificial intelligence; neural networks; fuzzy logics; machine learning; genetic algorithms; evolutionary computation; or any combination thereof.

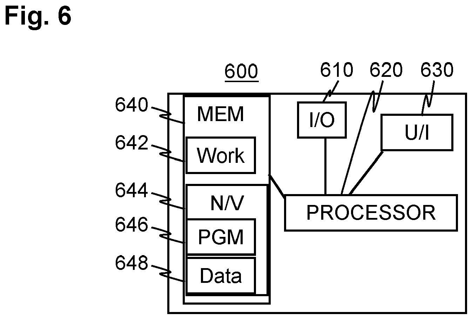

Fig. 6 shows a schematic block diagram of a generalized form of an apparatus according to an example embodiment with which the methods according to embodiments of the invention are implemented. The apparatus 600 in an embodiment is a smartphone or a tablet computer, with a structure known from these. There are also various other devices that can be used to implement the apparatus 600. The apparatus 600 comprises a communication interface 610; a processor 620; a user interface 630; and a memory 640.

The communication interface 610 comprises in an embodiment a wired and/or wireless communication circuitry, such as Ethernet; Wireless LAN; Bluetooth; GSM; CDMA; WCDMA; LTE; and/or 5G circuitry. The communication interface can be integrated in the apparatus 600 or provided as a part of an adapter, card or the like, that is attachable to the apparatus 600. The communication interface 610 may support one or more different communication technologies. The apparatus 600 may also or alternatively comprise more than one of the communication interfaces 610.

In this document, a processor may refer to a central processing unit (CPU); a microprocessor; a digital signal processor (DSP); a graphics processing unit; an application specific integrated circuit (ASIC); a field programmable gate array; a microcontroller; or a combination of such elements.

The user interface may comprise a circuitry for receiving input from a user of the apparatus 600, e.g., via a keyboard; graphical user interface shown on the display of the apparatus 600; speech recognition circuitry; or an accessory device; such as a headset; and for providing output to the user via, e.g., a graphical user interface or a loudspeaker.

The memory 640 comprises a work memory 642 and a persistent memory 644 configured to store computer program code 646 and data 648. The memory 640 may comprise any one or more of: a read-only memory (ROM); a programmable read-only memory (PROM); an erasable programmable read-only memory (EPROM); a random-access memory (RAM); a flash memory; a data disk; an optical storage; a magnetic storage; a smart card; a solid-state drive (SSD); or the like. The apparatus 600 may comprise a plurality of the memories 640. The memory 640 may be constructed as a part of the apparatus 600 or as an attachment to be inserted into a slot; port; or the like of the apparatus 600 by a user or by another person or by a robot. The memory 640 may serve the sole purpose of storing data, or be constructed as a part of an apparatus 600 serving other purposes, such as processing data.

A skilled person appreciates that in addition to the elements shown in Figure 6, the apparatus 600 may comprise other elements, such as microphones; displays; as well as additional circuitry such as input/output (I/O) circuitry; memory chips; application-specific integrated circuits (ASIC); processing circuitry for specific purposes such as source coding/decoding circuitry; channel coding/decoding circuitry; ciphering/deciphering circuitry; and the like. Additionally, the apparatus 600 may comprise a disposable or rechargeable battery (not shown) for powering the apparatus 600 if external power supply is not available.

Without in any way limiting the scope of the appended claims, some technical effects of the example embodiments of the invention are explained in the following.

The method and apparatus according to example embodiments of the invention shown in Figs 1A-6 is configured to provide for an enhanced user experience. The method according to example embodiments of the invention is further configured to decrease the likelihood of the user dropping out of using a music learning service. Furthermore, according to example embodiments of the invention, the use of the system is increased by providing improved flexibility.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method in an apparatus, the method comprising
receiving a set of learning targets based on a user selection;
determining a user skill level by analyzing an input of a user performance of at least one musical piece;
determining a difficulty level for each learning target of the set of learning targets;
determining an effort parameter for each learning target of the set of learning targets based on the user skill level and/or the difficulty level of each learning target;
arranging the set of learning targets based on the effort parameters; and
providing a personalized curriculum based on the arranged set of learning targets.

2. The method of claim 1, further comprising receiving input of a user performance of at least one learning target of the personalized curriculum.

3. The method of claim 1 or 2, further comprising determining a reward parameter for the set of learning targets; wherein arranging the set of learning targets comprises arranging the set of learning targets based on the effort parameters and the reward parameter.

4. The method of claim 1, 2 or 3, wherein arranging the set of learning targets comprises arranging the learning targets in order to minimize the sum of the effort parameters of the learning targets of the set of learning targets.

5. The method of claim 3 or 4, wherein arranging the set of learning targets comprises arranging the learning targets in order to maximize the reward parameter.

6. The method of any one of the claims 2-5, further comprising determining whether the user has completed the at least one learning target by analyzing the input of the user performance of the at least one learning target of the personalized curriculum.

7. The method of any one of the claims 2-6, further comprising updating the determined user skill level by analyzing the input of the user performance of the at least one learning target of the personalized curriculum and/or by analyzing a user performance of a further musical piece.

8. The method of claim 7, further comprising
updating the effort parameter of each learning target based on the updated user skill level and the difficulty level of each learning target;
updating the reward parameter of the set of learning targets; and
re-arranging the set of learning targets based on the updated effort parameter and/or the updated reward parameter; and
providing an updated personalized training curriculum based on the re-arranged set of learning targets.

9. The method of any one of the preceding claims, further comprising adding learning targets to the set of learning targets based on the effort parameter of the learning targets of the set of learning targets and/or the reward parameter of the set of learning targets.

10. The method of any one of the preceding claims, wherein determining the effort parameter comprises estimating the time required for the user to complete the learning target, and/or determining the reward parameter comprises estimating the time required between completing consecutive learning targets of the set of learning targets.

11. The method of any one of the preceding claims, further comprising presenting the personalized training curriculum to the user; and receiving user input relating to the learning targets on the personalized training curriculum.

12. The method of any one of the preceding claims, wherein determining the effort parameter and/or the reward parameter is based on stored data on user performance on learning targets similar to the learning targets of the set of learning targets.

13. The method of any one of the preceding claims, wherein the arranged set of learning targets is arranged as a linear list of learning targets or as a list of learning targets having multiple branches.

14. An apparatus comprising at least one memory and processor collectively configured to cause the apparatus to perform the method of any one of preceding claims.

15. A non-transitory memory medium comprising a computer program, the computer program comprising computer program code configured to, when executed by an apparatus, to cause the apparatus to perform the method of any one of preceding claims.
